# EUROPEAN PATENT APPLICATION

(11) **EP 4 663 519 A1**
(43) Date of publication of application: **17.12.2025**
(21) Application number: 24814293.7
(22) Date of filing: 23.05.2024
(51) Int. Cl.: B62D 25/08, B60R 19/34

(54) **FRONT-END FRAME STRUCTURE AND VEHICLE**

(30) Priority: 29.05.2023 CN 202310619005
(71) Applicant: Chongqing Changan Automobile Co., Ltd., Chongqing 400023 (CN)
(72) Inventor: PAN, Fenggang, Chongqing 400023 (CN); WU, Xiulan, Chongqing 400023 (CN); LI, Junkui, Chongqing 400023 (CN); ZHAO, Jia, Chongqing 400023 (CN)
(74) Representative: Keller Schneider Patent- und Markenanwälte AG
(86) International application number: PCT/CN2024/094944
(87) International publication number: WO 2024/245094

(57) **Abstract**

A front-end frame structure, including an impact cross beam assembly (8), and two force-bearing assemblies which are symmetrically arranged. Energy absorption box assemblies (81) each connected to a corresponding force-bearing assembly are respectively provided at two ends of the impact cross beam assembly (8). The force-bearing assembly includes a cabin side member sealing plate assembly (1) connected to the energy absorption box assembly (81), a cabin side member assembly (3) and a cabin upper side member assembly (2), where one end of the cabin side member sealing plate assembly (1) is connected to the cabin side member assembly (3), the other end of the cabin side member sealing plate assembly (1) is connected to the cabin upper side member assembly (2), and the cabin side member sealing plate assembly (1) includes a force transmission member (14) used for dispersing and transmitting impact energy borne by the cabin upper side member assembly (2) to the cabin side member assembly (3). Further disclosed is a vehicle. The impact energy transmitted to an upper portion of a cab can be reduced, thereby reducing the amount of intrusion into the cab, and improving the 25% overlap frontal crash performance.

## Description

### Cross-reference to Related Applications

The present application claims priority to Chinese patent application No. 202310619005.1, entitled "FRONT-END FRAME STRUCTURE AND VEHICLE", filed with the China National Intellectual Property Administration on May 29, 2023, the disclosure of which is hereby incorporated by reference in its entirety.

### Technical Field

The present application relates to vehicle frame structures, and specifically to a front-end frame structure and a vehicle.

### Background

Currently, automotive crash test regulations are becoming increasingly stringent, with growing emphasis on occupant safety within the passenger compartment in crashes. The China Insurance Automotive Safety Index (C-IASI), conducted by the China Insurance Research Institute, has introduced specific testing and evaluation protocols for the 25% overlap frontal crash test. The 25% overlap frontal crash test is also referred to as the small overlap crash test. Most existing vehicle body structures are primarily designed for full-frontal and 40% overlap crashes. In 25% overlap frontal crashes, localized areas are subjected to greater impact forces. During small overlap crashes, structures such as front bumper beams and energy-absorbing boxes in most vehicle models exhibit low overlap with the barrier. This results in the absence of effective structures capable of transmitting impact forces effectively, leading to inadequate dissipation of impact energy. Consequently, severe deformation even occurs in the A-pillar area, leading to excessive distortion of the passenger compartment. This poses a high risk of injury to vehicle occupants and may even pose life-threatening risks in severe cases.

An existing vehicle front-end body structure designed to improve overlap frontal crash performance includes a front bumper beam, a cabin side member assembly, and a cabin upper side member assembly. The cabin side member assembly is positioned rearward of the front bumper beam, and the cabin upper side member assembly is located outboard of the cabin side member assembly. A triangular gusset plate is connected between front ends of the cabin upper side member assembly and the cabin side member assembly. This design exhibits limited

transmission of impact energy to the cabin side member assembly during the initial phase of a crash. During the crash process, particularly after the barrier passes the triangular gusset plate, energy absorption relies solely on the cabin upper side member assembly, while the cabin side member assembly contributes negligibly to energy absorption through deformation. The rear end of the cabin upper side member assembly is rigidly connected to the upper portion of the cab, causing impact energy to be transmitted from the cabin upper side member assembly to the upper portion of the cab. This tends to cause significant intrusion into the upper portion of the cab, posing a threat to occupant safety.

Therefore, how to reduce cab intrusion and improve the 25% overlap frontal crash performance has become a pressing technical problem in the art.

### Summary

A first objective of the present application is to provide a front-end frame structure, to solve the problem in the related art that impact energy cannot be effectively absorbed, and significant intrusion into an upper portion of a cab tends to occur, posing a threat to occupant safety. A second objective is to provide a vehicle.

To achieve the foregoing objective, the technical solutions adopted in the present application are as follows:
A front-end frame structure includes an impact cross beam assembly, and two force-bearing assemblies which are symmetrically arranged, where energy absorption box assemblies each connected to a corresponding force-bearing assembly are respectively provided at two ends of the impact cross beam assembly, each of the force-bearing assemblies includes a cabin side member sealing plate assembly connected to one of the energy absorption box assemblies, a cabin side member assembly, and a cabin upper side member assembly, one end of the cabin side member sealing plate assembly is connected to the cabin side member assembly, the other end of the cabin side member sealing plate assembly is connected to the cabin upper side member assembly, and the cabin side member sealing plate assembly includes a force transmission member used for dispersing and transmitting impact energy borne by the cabin upper side member assembly to the cabin side member assembly.

According to the foregoing technical means, through the force transmission member, the cabin side member assembly and the cabin upper side member assembly transmit and absorb impact energy simultaneously, to reduce impact energy transmitted to an upper portion of a cab, thereby reducing the amount of intrusion into the cab.

Optionally, the cabin side member sealing plate assembly further includes a side member front-end sealing plate, a side member front-end lower plate, and a side member sealing plate support plate, the side member front-end lower plate is mounted on a surface on one side of the side member front-end sealing plate, the force transmission member is mounted on the side member front-end lower plate, one end of the side member sealing plate support plate is connected to the side member front-end lower plate and is provided with a passage channel for allowing the force transmission member to pass through, the side member front-end lower plate is connected to the corresponding cabin upper side member assembly, both the side member sealing plate support plate and the force transmission member are connected to the corresponding cabin side member assembly, and a surface on the other side of the side member front-end sealing plate is connected to the corresponding energy absorption box assembly.

According to the foregoing technical means, it is convenient to disperse impact energy borne by the cabin upper side member assembly to the cabin side member assembly.

Optionally, the cabin side member sealing plate assembly further includes a side member front-end upper plate and a side member sealing plate reinforcement member, the side member front-end upper plate is located above the side member front-end lower plate, the side member front-end upper plate is connected to the side member front-end lower plate, the side member sealing plate support plate and the cabin side member assembly, the side member sealing plate reinforcement member is located below the side member front-end lower plate, and the side member sealing plate reinforcement member is connected to the side member front-end lower plate, the side member sealing plate support plate and the cabin side member assembly.

According to the foregoing technical means, it is convenient to reinforce the side member front-end sealing plate.

Optionally, the force transmission member is a circular tube, and the side member front-end lower plate is provided with a groove rib used for mounting the force transmission member.

According to the foregoing technical means, the circular tube facilitates the transmission of impact energy.

Optionally, the cabin side member assembly includes a cabin side member inner plate and a cabin side member outer plate, the cabin side member inner plate and the cabin side member outer plate are joined to each other to form a box-shaped structure with a rectangular cross-section, and the force transmission member passes through the cabin side member outer plate to be connected to the cabin side member inner plate.

Optionally, a cabin side member internal reinforcement plate located inside the box-shaped structure is mounted on the cabin side member inner plate.

Optionally, a plurality of cabin side member collapsible limiter plates are provided on the cabin side member internal reinforcement plate.

Optionally, the cabin side member inner plate is provided with a first collapsible guide rib and a second collapsible guide rib both extending along an up-down direction, and in a front-back direction, the first collapsible guide rib is located between neighboring cabin side member collapsible limiter plates, and the second collapsible guide rib is located in front of the first collapsible guide rib, the first collapsible guide rib is a collapsible guide concave rib, and the second collapsible guide rib is a collapsible guide convex rib.

According to the foregoing technical means, during a crash process, it is convenient to fully deform to absorb energy.

Optionally, the cabin side member outer plate is provided with a third collapsible guide rib extending along the up-down direction, and the third collapsible guide rib is a collapsible guide concave rib.

According to the foregoing technical means, during a crash process, it is convenient to fully deform to absorb energy.

Optionally, the cabin upper side member assembly includes a cabin upper side member outer plate and a cabin upper side member inner plate, and the cabin upper side member outer plate and the cabin upper side member inner plate are joined to each other to form a box-shaped structure with a rectangular cross-section.

Optionally, the cabin upper side member assembly is provided with a collapsible rib.

According to the foregoing technical means, it is convenient to collapse to absorb energy.

Optionally, the cabin upper side member assembly is provided with a collapsible rib.

According to the foregoing technical means, it is convenient to collapse to absorb energy.

Optionally, the cabin upper side member assembly is arc-shaped, and a cross-sectional area of the cabin upper side member assembly gradually increases from front to back.

Optionally, the cabin side member sealing plate assembly is an inclined wedge structure.

According to the foregoing technical means, during a crash process, an obliquely rearward impact force can be transmitted to the cabin side member assembly.

Optionally, a first wheel bumper reinforcement member assembly is provided between the cabin side member assembly and the cabin upper side member assembly.

According to the foregoing technical means, during a crash process, impact energy of the cabin upper side member assembly can be transmitted to the cabin side member assembly.

Optionally, the first wheel bumper reinforcement member assembly includes a wheel bumper reinforcement member upper plate and a wheel bumper reinforcement member lower plate, and the wheel bumper reinforcement member upper plate and the wheel bumper reinforcement member lower plate are joined to each other to form the box-shaped structure with the rectangular cross-section.

Optionally, a second wheel bumper reinforcement member assembly is further provided between the cabin side member assembly and the cabin upper side member assembly, and the first wheel bumper reinforcement member assembly and the second wheel bumper reinforcement member assembly are arranged in parallel.

According to the foregoing technical means, during a crash process, impact energy of the cabin upper side member assembly can be transmitted to the cabin side member assembly.

Optionally, the second wheel bumper reinforcement member assembly includes a wheel bumper housing and a wheel bumper housing reinforcement beam, and the wheel bumper housing is mounted on the wheel bumper housing reinforcement beam.

Optionally, the force-bearing assembly further includes a cabin side member rear section assembly, and the cabin side member rear section assembly is mounted on a rear end of the cabin side member assembly.

Optionally, the cabin side member rear section assembly includes a side member A-pillar connection member, a side member rear section outer liner plate, a side member rear section inner liner plate, a side member rear section, and a side member rear section inner support plate, the side member rear section outer liner plate and the side member rear section inner liner plate are respectively provided on two sides of the side member rear section inner support plate, the side member rear section is housed within the side member rear section inner support plate, and the side member A-pillar connection member is mounted on top of the side member rear section outer liner plate.

According to the foregoing technical means, during a crash process, it is convenient to disperse force transmission.

Optionally, the force-bearing assembly further includes a reinforcement cross beam assembly, and two ends of the reinforcement cross beam assembly are respectively connected to one cabin side member rear section assembly, to enable the impact cross beam assembly, the cabin side member assemblies, the cabin side member rear section assemblies, and the reinforcement cross beam assembly to be interconnected to form a closed frame structure.

A vehicle is provided, provided with the foregoing front-end frame structure.

The beneficial effects of the present application are as follows:
In the present application, the force transmission member is disposed in the cabin side member sealing plate assembly, and the impact energy borne by the cabin upper side member assembly can be dispersed to the cabin side member assembly, so that the cabin side member assembly and the cabin upper side member assembly transmit and absorb impact energy simultaneously, to reduce impact energy transmitted to an upper portion of a cab, thereby reducing the amount of intrusion into the cab, and achieving the objective of improving the 25% overlap frontal crash performance.

### Brief Description of the Drawings

FIG. 1 is a top view of a front-end frame structure in a pre-impact state according to a specific embodiment of the present application;
FIG. 2 is a side view of a front-end frame structure in a pre-impact state according to a specific embodiment of the present application;
FIG. 3 is an isometric view of a front-end frame structure according to a specific embodiment of the present application;
FIG. 4 is a schematic structural diagram of a cabin side member sealing plate assembly according to a specific embodiment of the present application;
FIG. 5 is an exploded view of a cabin side member sealing plate assembly according to a specific embodiment of the present application;
FIG. 6 is a schematic cross-sectional view along A-A in FIG. 4;
FIG. 7 is a schematic structural diagram of a cabin upper side member assembly according to a specific embodiment of the present application;
FIG. 8 is a side view of a cabin upper side member assembly according to a specific embodiment of the present application;
FIG. 9 is a schematic cross-sectional view along B-B in FIG. 8;
FIG. 10 is a schematic structural diagram of a cabin side member assembly according to a specific embodiment of the present application;
FIG. 11 is a schematic cross-sectional view along C-C in FIG. 10;
FIG. 12 is a schematic cross-sectional view along D-D in FIG. 10;
FIG. 13 is a schematic structural diagram of a first wheel bumper reinforcement member assembly according to a specific embodiment of the present application;
FIG. 14 is a schematic structural diagram of a second wheel bumper reinforcement member assembly according to a specific embodiment of the present application;
FIG. 15 is a schematic structural diagram of a reinforcement cross beam assembly according to a specific embodiment of the present application;
FIG. 16 is a schematic structural diagram 1 of a cabin side member rear section assembly according to a specific embodiment of the present application; and
FIG. 17 is a schematic structural diagram 2 of a cabin side member rear section assembly according to a specific embodiment of the present application.

Where: 1-cabin side member sealing plate assembly; 11-side member front-end sealing plate; 111-first side member front-end sealing plate lap joint surface; 112-second side member front-end sealing plate lap joint surface; 113-third side member front-end sealing plate lap joint surface; 12-side member front-end upper plate; 121-first side member front-end upper plate lap joint surface; 122-second side member front-end upper plate lap joint surface; 123-third side member front-end upper plate lap joint surface; 124-fourth side member front-end upper plate lap joint surface; 13-side member front-end lower plate; 131-groove rib; 132-first side member front-end lower plate lap joint surface; 133-second side member front-end lower plate lap joint surface; 134-third side member front-end lower plate lap joint surface; 135-fourth side member front-end lower plate lap joint surface; 136-fifth side member front-end lower plate lap joint surface; 137-sixth side member front-end lower plate lap joint surface; 138-seventh side member front-end lower plate lap joint surface; 139-eighth side member front-end lower plate lap joint surface; 14-force transmission member; 15-side member sealing plate support plate; 151-circular convex rib; 152-weld access hole; 153-first side member sealing plate support plate lap joint surface; 154-second side member sealing plate support plate lap joint surface; 155-third side member sealing plate support plate lap joint surface; 156-fourth side member sealing plate support plate lap joint surface; 157-fifth side member sealing plate support plate lap joint surface; 158-sixth side member sealing plate support plate lap joint surface; 16-side member sealing plate reinforcement member; 161-first side member sealing plate reinforcement member lap joint surface; 162-second side member sealing plate reinforcement member lap joint surface; 2-cabin upper side member assembly; 21-cabin upper side member front section outer plate; 211-first cabin upper side member front section outer plate lap joint surface; 212-second cabin upper side member front section outer plate lap joint surface; 22-cabin upper side member rear section outer plate; 221-first weakened hole; 222-second weakened hole; 223-cabin upper side member rear section outer plate lap joint surface; 23-cabin upper side member front section inner plate; 231-first cabin upper side member front section inner plate lap joint surface; 232-second cabin upper side member front section inner plate lap joint surface; 24-cabin upper side member middle section inner plate; 241-first cabin upper side member middle section inner plate lap joint surface; 242-second cabin upper side member middle section inner plate lap joint surface; 25-cabin upper side member rear section inner plate; 26-cabin upper side member rear section lower plate; 261-collapsible rib; 262-cabin upper side member rear section lower plate lap joint surface; 3-cabin side member assembly; 31-cabin side member inner plate; 311-first collapsible guide rib; 312-second collapsible guide rib; 313-cabin side member inner plate through hole; 314-first cabin side member inner plate lap joint surface; 315-second cabin side member inner plate lap joint surface; 316-third cabin side member inner plate lap joint surface; 32-cabin side member outer plate; 321-third collapsible guide rib; 322-cabin side member outer plate through hole; 323-first cabin side member outer plate lap joint surface; 324-second cabin side member outer plate lap joint surface; 325-third cabin side member outer plate lap joint surface; 326-cabin side member outer plate flanged edge; 327-cabin side member outer plate lateral edge; 328-cabin side member inner plate flanged edge; 33-cabin side member internal reinforcement plate; 331-first cabin side member internal reinforcement plate lap joint surface; 332-second cabin side member internal reinforcement plate lap joint surface; 34-cabin side member collapsible front limiter plate; 35-cabin side member collapsible rear limiter plate; 4-reinforcement cross beam assembly; 41-first reinforcement cross beam assembly lap joint surface; 42-second reinforcement cross beam assembly lap joint surface; 43-third reinforcement cross beam assembly lap joint surface; 44-fourth reinforcement cross beam assembly lap joint surface; 45-fifth reinforcement cross beam assembly lap joint surface; 46-sixth reinforcement cross beam assembly lap joint surface; 47-seventh reinforcement cross beam assembly lap joint surface; 5-cabin side member rear section assembly; 51-side member A-pillar connection member; 511-first side member A-pillar connection member lap joint surface; 512-second side member A-pillar connection member lap joint surface; 513-third side member A-pillar connection member lap joint surface; 514-fourth side member A-pillar connection member lap joint surface; 515-fifth side member A-pillar connection member lap joint surface; 52-side member rear section outer liner plate; 521-first side member rear section outer liner plate lap joint surface; 522-second side member rear section outer liner plate lap joint surface; 523-third side member rear section outer liner plate lap joint surface; 53-side member rear section inner liner plate; 531-first side member rear section inner liner plate lap joint surface; 532-second side member rear section inner liner plate lap joint surface; 54-side member rear section; 541-first side member rear section lap joint surface; 542-second side member rear section lap joint surface; 543-third side member rear section lap joint surface; 55-side member rear section inner support plate; 6-first wheel bumper reinforcement member assembly; 61-wheel bumper reinforcement member upper plate; 611-first wheel bumper reinforcement member upper plate lap joint surface; 612-second wheel bumper reinforcement member upper plate lap joint surface; 62-wheel bumper reinforcement member lower plate; 621-first wheel bumper reinforcement member lower plate lap joint surface; 622-second wheel bumper reinforcement member lower plate lap joint surface; 7-second wheel bumper reinforcement member assembly; 71-wheel bumper housing; 711-wheel bumper housing lap joint surface; 72-wheel bumper housing reinforcement beam; 721-wheel bumper housing reinforcement beam lap joint surface; 8-impact cross beam assembly; and 81-energy absorption box assembly.

### Detailed Description

The embodiments of the present application are described below with reference to the accompanying drawings and optional embodiments, and those skilled in the art can easily understand other advantages and efficacy of the present application through the content disclosed in this specification. The present application may also be implemented or applied through other different specific embodiments, and various modifications or changes may also be made to various details in this specification based on different views and applications without departing from the spirit of the present application. It should be understood that the optional embodiments are provided solely to describe the present application, and are not intended to limit the scope of protection of the present application.

First, it should be noted that the drawings provided in the following embodiments schematically describe the basic concept of the present application, and only the components related to the present application are shown in the drawings, which are not drawn in accordance with the number, shape, and size of the components in actual implementation, and the components, the number, and the proportion of the components may be changed arbitrarily in actual implementation, and the layout of the components may be more complex.

Next, it should be noted that the terms "up, down, left, right, front, and rear" refer to the orientation of a front-end frame structure. In a case that the front-end frame structure is used in a specific vehicle, these directions generally align with the corresponding directions of the vehicle. It should be understood that the terms are based on orientation or location relationships shown in the accompanying drawings, and are only used to facilitate description of the present application and simplify description, but are not used to indicate or imply that the apparatuses or elements must have specific orientations or are constructed and operated by using specific orientations, and therefore, cannot be understood as a limitation to the present application.

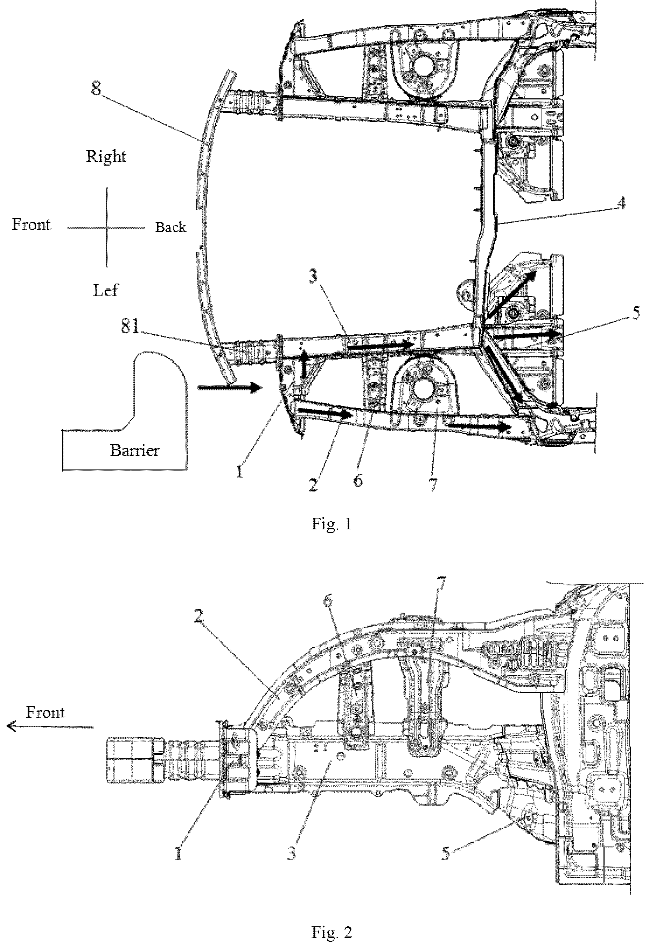

Embodiments of the present application provide a front-end frame structure. The front-end frame structure is a portion of a body structure of a vehicle. As shown in FIG. 1, a cabin side member sealing plate assembly 1 on a left side and a cabin side member sealing plate assembly 1 on a right side are symmetrically arranged about a vehicle transverse center symmetric plane. A cabin upper side member assembly 2 on the left side and a cabin upper side member assembly 2 on the right side are symmetrically arranged about the vehicle transverse center symmetric plane. A cabin side member assembly 3 on the left side and a cabin side member assembly 3 on the right side are symmetrically arranged about the vehicle transverse center symmetric plane. A cabin side member rear section assembly 5 on the left side and a cabin side member rear section assembly 5 on the right side are symmetrically arranged about the vehicle transverse center symmetric plane. A first wheel bumper reinforcement member assembly 6 on the left side and a first wheel bumper reinforcement member assembly 6 on the right side are symmetrically arranged about the vehicle transverse center symmetric plane. A second wheel bumper reinforcement member assembly 7 on the left side and a second wheel bumper reinforcement member assembly 7 on the right side are symmetrically arranged about the vehicle transverse center symmetric plane. Therefore, only the structures on the left side are marked in the figures, and the related arrangement of the structures on the right side is symmetric.

As shown in FIG. 1 to FIG. 5 and FIG. 10, a basic embodiment of the present application provides a front-end frame structure, including an impact cross beam assembly 8 and two force-bearing assemblies. The two force-bearing assemblies are symmetrically arranged. Energy absorption box assemblies 81 are respectively connected to two ends of the impact cross beam assembly 8. Each of the energy absorption box assemblies 81 is connected to a corresponding force-bearing assembly. The force-bearing assembly includes a cabin side member sealing plate assembly 1, a cabin side member assembly 3, and a cabin upper side member assembly 2. The cabin side member sealing plate assembly 1 is connected to the energy absorption box assembly 81. One end of the cabin side member sealing plate assembly 1 is connected to the cabin side member assembly 3. The other end of the cabin side member sealing plate assembly 1 is connected to the cabin upper side member assembly 2. The cabin side member sealing plate assembly 1 includes a force transmission member 14. The force transmission member 14 is used for dispersing and transmitting impact energy borne by the cabin upper side member assembly 2 to the cabin side member assembly 3.

Generally, the energy absorption box assembly 81 may include one energy absorption box shown in FIG. 1, or may include two or more energy absorption boxes arranged in parallel. Due to uncontrollable impact angles in real-world collisions, in a conventional single energy absorption box structure, an energy absorption box is prone to buckling upon impact, and as a result fails to achieve an energy absorption effect. Therefore, the use of two energy absorption boxes enhances the structural stability of the energy absorption box assembly 81, so that the energy absorption box assembly 81 can perform directional force transmission upon impact, to reduce the likelihood of buckling or deflection of an energy absorption box in real-world collisions, thereby enhancing the reliability of the impact cross beam assembly 8.

In a specific embodiment, the cabin side member sealing plate assembly 1 further includes a side member front-end sealing plate 11, a side member front-end lower plate 13, and a side member sealing plate support plate 15. The side member front-end lower plate 13 is mounted on a surface on one side of the side member front-end sealing plate 11. In a case that the front-end frame structure is disposed on a specific vehicle, the surface on the side of the side member front-end sealing plate 11 is a rear end surface of the side member front-end sealing plate 11. The side member front-end lower plate 13 is mounted on an outer side portion of the surface on the side of the side member front-end sealing plate 11. The force transmission member 14 is mounted on the side member front-end lower plate 13. The side member sealing plate support plate 15 is generally a triangular frame structure. One end of the side member sealing plate support plate 15 is connected to the side member front-end lower plate 13, and a protrusion is provided at the end to form a passage channel to allow the force transmission member 14 to pass through. A lateral edge of the side member sealing plate support plate 15 tilts outward from one end close to the side member front-end lower plate 13 to the other end far away from the side member front-end lower plate 13, so that a right-side flanged edge of the side member sealing plate support plate 15 and a right-side portion of the side member front-end sealing plate 11 form a closed frame structure, to enable the cabin side member sealing plate assembly 1 to be generally an approximately box-shaped structure. The side member front-end lower plate 13 is used for being connected to the corresponding cabin upper side member assembly 2. The side member sealing plate support plate 15 and the force transmission member 14 are respectively used for being connected to the corresponding cabin side member assembly 3. A surface on the other side of the side member front-end sealing plate 11 is connected to the corresponding energy absorption box assembly 81. The surface on the side of the side member front-end sealing plate 11 is a front end surface of the side member front-end sealing plate 11.

Optionally, the cabin side member sealing plate assembly 1 further includes a side member front-end upper plate 12 and a side member sealing plate reinforcement member 16. The side member front-end upper plate 12 is located above the side member front-end lower plate 13. The side member front-end upper plate 12 is connected to the side member front-end lower plate 13, the side member sealing plate support plate 15 and the cabin side member assembly 3. The side member sealing plate reinforcement member 16 is located below the side member front-end lower plate 13. The side member sealing plate reinforcement member 16 is connected to the side member front-end lower plate 13, the side member sealing plate support plate 15 and the cabin side member assembly 3.

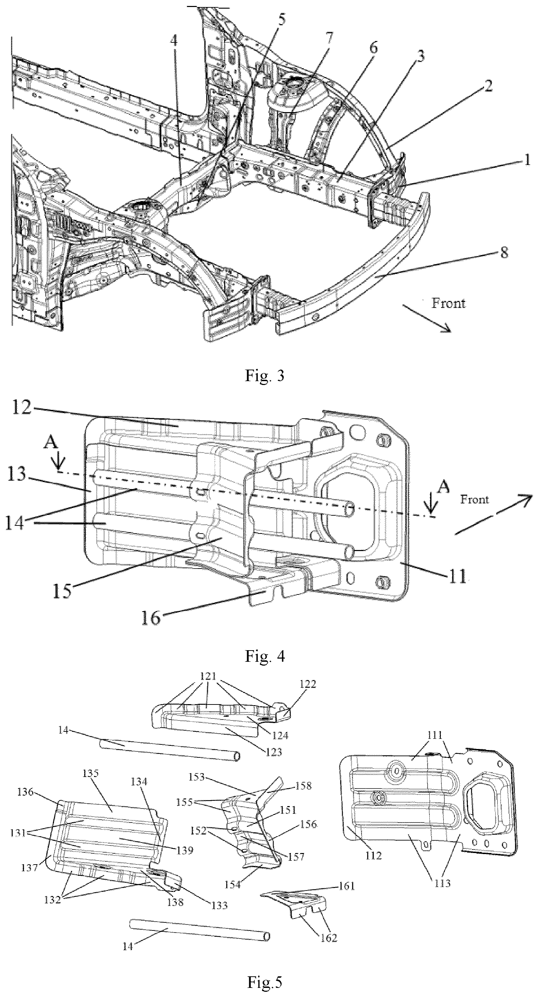

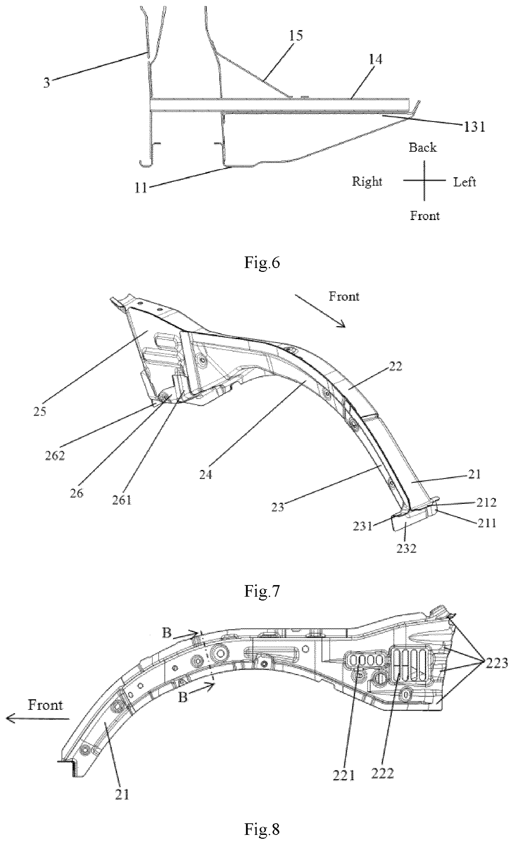

Specifically, as shown in FIG. 5 and FIG. 6, the side member front-end sealing plate 11 includes a first side member front-end sealing plate lap joint surface 111, a second side member front-end sealing plate lap joint surface 112, and a third side member front-end sealing plate lap joint surface 113. The side member front-end upper plate 12 includes a first side member front-end upper plate lap joint surface 121, a second side member front-end upper plate lap joint surface 122, a third side member front-end upper plate lap joint surface 123, and a fourth side member front-end upper plate lap joint surface 124. The side member front-end lower plate 13 includes a first side member front-end lower plate lap joint surface 132, a second side member front-end lower plate lap joint surface 133, a third side member front-end lower plate lap joint surface 134, a fourth side member front-end lower plate lap joint surface 135, a fifth side member front-end lower plate lap joint surface 136, a sixth side member front-end lower plate lap joint surface 137, a seventh side member front-end lower plate lap joint surface 138, and an eighth side member front-end lower plate lap joint surface 139. The side member sealing plate support plate 15 includes a circular convex rib 151, a weld access hole 152, a first side member sealing plate support plate lap joint surface 153, a second side member sealing plate support plate lap joint surface 154, a third side member sealing plate support plate lap joint surface 155, a fourth side member sealing plate support plate lap joint surface 156, a fifth side member sealing plate support plate lap joint surface 157, and a sixth side member sealing plate support plate lap joint surface 158. The side member sealing plate reinforcement member 16 includes a first side member sealing plate reinforcement member lap joint surface 161 and a second side member sealing plate reinforcement member lap joint surface 162. The side member front-end lower plate 13 is connected to the third side member front-end upper plate lap joint surface 123 of the side member front-end upper plate 12 by the fourth side member front-end lower plate lap joint surface 135 and the fifth side member front-end lower plate lap joint surface 136. The side member front-end lower plate 13 is respectively correspondingly connected to the second side member front-end sealing plate lap joint surface 112 and the third side member front-end sealing plate lap joint surface 113 of the cabin side member sealing plate assembly 1 by the first side member front-end lower plate lap joint surface 132 and the sixth side member front-end lower plate lap joint surface 137. The side member front-end upper plate 12 is connected to the first side member front-end sealing plate lap joint surface 111 of the cabin side member sealing plate assembly 1 by the first side member front-end upper plate lap joint surface 121. The side member sealing plate support plate 15 is connected to the eighth side member front-end lower plate lap joint surface 139 of the side member front-end lower plate 13 by the fifth side member sealing plate support plate lap joint surface 157. The side member sealing plate support plate 15 is connected to the fourth side member front-end upper plate lap joint surface 124 of the side member front-end upper plate 12 by the first side member sealing plate support plate lap joint surface 153 and the third side member sealing plate support plate lap joint surface 155. The first side member sealing plate reinforcement member lap joint surface 161 of the side member sealing plate reinforcement member 16 is generally V-shaped. The side member sealing plate reinforcement member 16 is respectively correspondingly connected to the second side member sealing plate support plate lap joint surface 154 of the side member sealing plate support plate 15 and the seventh side member front-end lower plate lap joint surface 138 of the side member front-end lower plate 13 by the first side member sealing plate reinforcement member lap joint surface 161. Optionally, the force transmission member 14 may be a circular tube. A groove rib 131 is provided on the side member front-end lower plate 13. The force transmission member 14 is mounted in the groove rib 131, and the force transmission member 14 passes through the passage channel of the side member sealing plate support plate 15. The weld access hole 152 is opened in the passage channel. The force transmission member 14 and the side member sealing plate support plate 15 are fixed through the weld access hole 152 in a welding manner, for example, carbon-dioxide shielded arc welding. The circular convex rib 151 is further provided on a lateral edge of the side member sealing plate support plate 15. One end of the circular convex rib 151 is joined to the passage channel.

As shown in FIG. 4, the side member sealing plate support plate 15 is a triangular three-dimensional structure, and cooperates with the side member front-end sealing plate 11 to form a box-like shape. The side member front-end sealing plate 11, the side member front-end upper plate 12, the side member front-end lower plate 13, the force transmission member 14, the side member sealing plate support plate 15, and the side member sealing plate reinforcement member 16 are interconnected to form the cabin side member sealing plate assembly 1 to enable the cabin side member sealing plate assembly 1 to be an inclined wedge box-shaped structure. During a crash process, an obliquely rearward impact force may be transmitted to the cabin side member assembly 3, to disperse impact energy to the cabin side member assembly 3 to make it easier for the cabin side member assembly 3 to buckle to absorb energy.

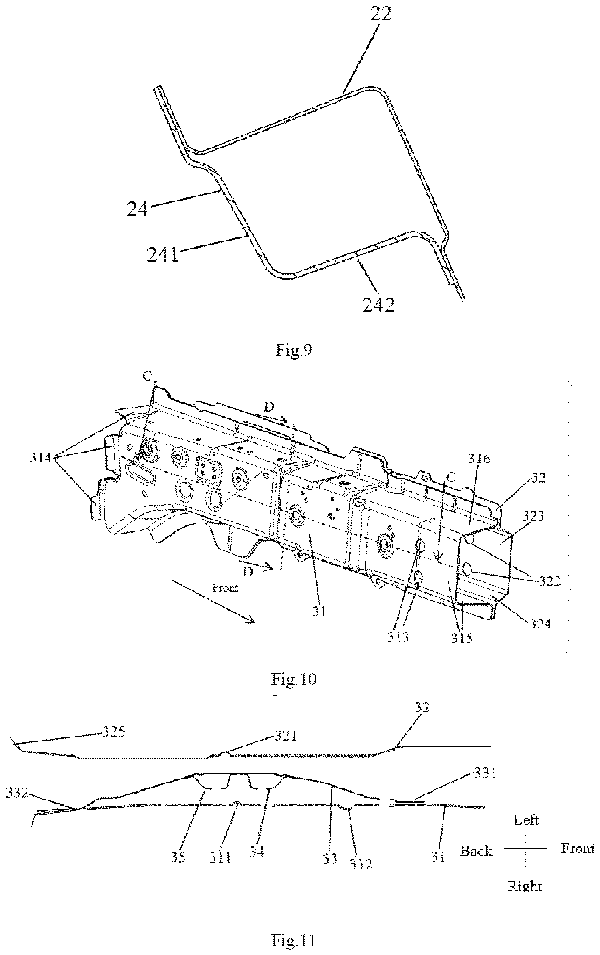

In some specific embodiments, as shown in FIG. 10, the cabin side member assembly 3 includes a cabin side member inner plate 31 and a cabin side member outer plate 32. The cabin side member inner plate 31 and the cabin side member outer plate 32 are joined to each other to form a box-shaped structure with a rectangular cross-section. In front-end areas of the cabin side member inner plate 31 and the cabin side member outer plate 32, a cabin side member inner plate through hole 313 is provided in a lateral edge of the cabin side member inner plate 31, and a cabin side member outer plate through hole 322 is provided in a cabin side member outer plate lateral edge 327 of the cabin side member outer plate 32. The force transmission member 14 passes through the cabin side member outer plate through hole 322 of the cabin side member outer plate 32 to be connected to the cabin side member inner plate through hole 313 of the cabin side member inner plate 31. An end portion of the force transmission member 14 may be generally connected to the cabin side member inner plate through hole 313 of the cabin side member inner plate 31 through welding, for example, through carbon-dioxide shielded arc welding.

Both the cabin side member inner plate 31 and the cabin side member outer plate 32 are U-shaped structures. The cabin side member inner plate 31 extends outward to form a cabin side member inner plate flanged edge 328. The cabin side member outer plate 32 extends outward to form a cabin side member outer plate flanged edge 326. A flanged edge of a cabin side member internal reinforcement plate 33 is sandwiched between the cabin side member outer plate flanged edge 326 and the cabin side member inner plate flanged edge 328, thereby forming the box-shaped structure with the rectangular cross-section.

Optionally, as shown in FIG. 11, the cabin side member internal reinforcement plate 33 is located inside the box-shaped structure, and is mounted on the cabin side member inner plate 31. The cabin side member internal reinforcement plate 33 generally has a "bridge shape", i.e., an arch bridge shape, with a curved shape protruding outward, and the top of the bridge shape extends in the outboard direction. Two ends of the cabin side member internal reinforcement plate 33 are respectively connected to the cabin side member inner plate 31 at a first cabin side member internal reinforcement plate lap joint surface 331 and a second cabin side member internal reinforcement plate lap joint surface 332. In addition, a plurality of cabin side member collapsible limiter plates are further provided on the cabin side member internal reinforcement plate 33. In the embodiment shown in FIG. 11, two cabin side member collapsible limiter plates are provided, and are respectively a cabin side member collapsible front limiter plate 34 and a cabin side member collapsible rear limiter plate 35.

In some embodiments, a first collapsible guide rib 311 and a second collapsible guide rib 312 are provided on the cabin side member inner plate 31. Both the first collapsible guide rib 311 and the second collapsible guide rib 312 extend along an up-down direction. In a front-back direction, the first collapsible guide rib 311 is located between neighboring cabin side member collapsible limiter plates. The second collapsible guide rib 312 is located in front of the first collapsible guide rib 311. Specifically, in the embodiment shown in FIG. 11, in the front-back direction, the first collapsible guide rib 311 is located between the cabin side member collapsible front limiter plate 34 and the cabin side member collapsible rear limiter plate 35, and the second collapsible guide rib 312 is located between the cabin side member collapsible front limiter plate 34 and the first cabin side member internal reinforcement plate lap joint surface 331. Optionally, the first collapsible guide rib 311 is a collapsible guide concave rib, and the second collapsible guide rib 312 is a collapsible guide convex rib. When the vehicle encounters a collision, the first collapsible guide rib 311 and the second collapsible guide rib 312 bend and deform in opposite directions, so that the cabin side member assembly 3 exhibits a Z-shaped three-section buckling mode. In one aspect, the cabin side member assembly 3 is more stable than other conventional collapsible guide structures. In another aspect, the cabin side member assembly 3 with Z-shaped buckling has higher stability and strength than other buckled states.

In addition, a third collapsible guide rib 321 is further provided on the cabin side member outer plate 32. The third collapsible guide rib 321 extends along the up-down direction. The third collapsible guide rib 321 is a collapsible guide concave rib. In the front-back direction, the third collapsible guide rib 321 is located at an upper portion of the bridge shape of the cabin side member internal reinforcement plate 33, and is close to the first collapsible guide rib 311. When the vehicle encounters a collision, the third collapsible guide rib 321 and the first collapsible guide rib 311 bend and deform in the same direction, thereby facilitating the bending and deformation of the cabin side member assembly 3.

As shown in FIG. 10, the cabin side member inner plate 31 includes a first cabin side member inner plate lap joint surface 314, a second cabin side member inner plate lap joint surface 315, and a third cabin side member inner plate lap joint surface 316. The first cabin side member inner plate lap joint surface 314 is located at a rear end of the cabin side member inner plate 31. The second cabin side member inner plate lap joint surface 315 is located on a front-end side surface and a front-end bottom surface of the cabin side member inner plate 31. The third cabin side member inner plate lap joint surface 316 is located on a front-end top surface of the cabin side member inner plate 31. The cabin side member outer plate 32 includes a first cabin side member outer plate lap joint surface 323, a second cabin side member outer plate lap joint surface 324, and a third cabin side member outer plate lap joint surface 325. The first cabin side member outer plate lap joint surface 323 is located on a front-end side surface of the cabin side member outer plate 32. The second cabin side member outer plate lap joint surface 324 is located on a front-end bottom surface of the cabin side member outer plate 32. The third cabin side member outer plate lap joint surface 325 is located at a rear end of the cabin side member outer plate 32.

The cabin side member sealing plate assembly 1 is connected to the first cabin side member outer plate lap joint surface 323 of the cabin side member outer plate 32 by the third side member front-end lower plate lap joint surface 134. The cabin side member sealing plate assembly 1 is connected to the cabin side member outer plate 32 by the second side member front-end upper plate lap joint surface 122 and the sixth side member sealing plate support plate lap joint surface 158. The cabin side member sealing plate assembly 1 is connected to the second cabin side member outer plate lap joint surface 324 of the cabin side member outer plate 32 by the second side member sealing plate reinforcement member lap joint surface 162. The cabin side member sealing plate assembly 1 is connected to the first cabin side member outer plate lap joint surface 323 of the cabin side member outer plate 32 by the fourth side member sealing plate support plate lap joint surface 156. The cabin side member inner plate 31 is connected to the side member front-end sealing plate 11 of the cabin side member sealing plate assembly 1 by the second cabin side member inner plate lap joint surface 315 and the third cabin side member inner plate lap joint surface 316. The cabin side member assembly 3 is connected to the cabin side member rear section assembly 5 by the first cabin side member inner plate lap joint surface 314 and the third cabin side member outer plate lap joint surface 325.

In some embodiments, the cabin upper side member assembly 2 includes a cabin upper side member outer plate and a cabin upper side member inner plate. The cabin upper side member outer plate and the cabin upper side member inner plate are joined to each other to form the box-shaped structure with the rectangular cross-section. Specifically, as shown in FIG. 7, the cabin upper side member outer plate includes a cabin upper side member front section outer plate 21 and a cabin upper side member rear section outer plate 22 that are connected in sequence from front to back. The cabin upper side member inner plate includes a cabin upper side member front section inner plate 23, a cabin upper side member middle section inner plate 24, and a cabin upper side member rear section inner plate 25 that are connected in sequence from front to back. A cabin upper side member rear section lower plate 26 is mounted at a lower portion of the cabin upper side member rear section inner plate 25. A collapsible rib 261 is provided on the cabin upper side member rear section lower plate 26. The collapsible rib 261 extends along the up-down direction. The cabin upper side member rear section lower plate 26 further includes a cabin upper side member rear section lower plate lap joint surface 262. In addition, the cabin upper side member front section outer plate 21 includes a first cabin upper side member front section outer plate lap joint surface 211 and a second cabin upper side member front section outer plate lap joint surface 212. The first cabin upper side member front section outer plate lap joint surface 211 and the second cabin upper side member front section outer plate lap joint surface 212 are located at a front end of the cabin upper side member front section outer plate 21. The cabin upper side member front section inner plate 23 includes a first cabin upper side member front section inner plate lap joint surface 231 and a second cabin upper side member front section inner plate lap joint surface 232. The first cabin upper side member front section inner plate lap joint surface 231 and the second cabin upper side member front section inner plate lap joint surface 232 are located at a front end of the cabin upper side member front section inner plate 23. Weakened holes are provided in the cabin upper side member assembly 2. Specifically, as shown in FIG. 8, a first weakened hole 221 and a second weakened hole 222 are provided in a rear-end area of the cabin upper side member rear section outer plate 22. When a collision occurs, the first weakened hole 221 and the second weakened hole 222 facilitate the bending and deformation of the cabin upper side member assembly 2. A cabin upper side member rear section outer plate lap joint surface 223 is formed at a rear end of the cabin upper side member rear section outer plate 22. As shown in FIG. 9, the cabin upper side member middle section inner plate 24 includes a first cabin upper side member middle section inner plate lap joint surface 241 and a second cabin upper side member middle section inner plate lap joint surface 242. The first cabin upper side member middle section inner plate lap joint surface 241 is located on a lateral edge of the cabin upper side member middle section inner plate 24. The second cabin upper side member middle section inner plate lap joint surface 242 is located on a bottom edge of the cabin upper side member middle section inner plate 24. The cabin upper side member assembly 2 are correspondingly connected to the cabin side member sealing plate assembly 1 at the fourth side member front-end upper plate lap joint surface 124 and the fourth side member front-end lower plate lap joint surface 135 through the first cabin upper side member front section outer plate lap joint surface 211, the second cabin upper side member front section outer plate lap joint surface 212, the first cabin upper side member front section inner plate lap joint surface 231, and the second cabin upper side member front section inner plate lap joint surface 232. The cabin upper side member assembly 2 is connected to the body-in-white at the rear portion by the cabin upper side member rear section outer plate lap joint surface 223.

As a specific embodiment, the cabin upper side member assembly 2 is substantially arc-shaped, and a cross-sectional area of the cabin upper side member assembly 2 gradually increases from front to back. In one aspect, the cabin upper side member assembly 2 may have a large overlapping area with the barrier in a left-right direction, to effectively transmit impact energy to the cabin side member assembly 3, thereby reducing the amount of intrusion into the passenger compartment of the vehicle due to impact. In another aspect, the cabin upper side member assembly 2 is an arc-shaped structure and has a particular rearward pushing force, thereby enhancing the energy absorption effect, and making energy absorption smoother and more thorough.

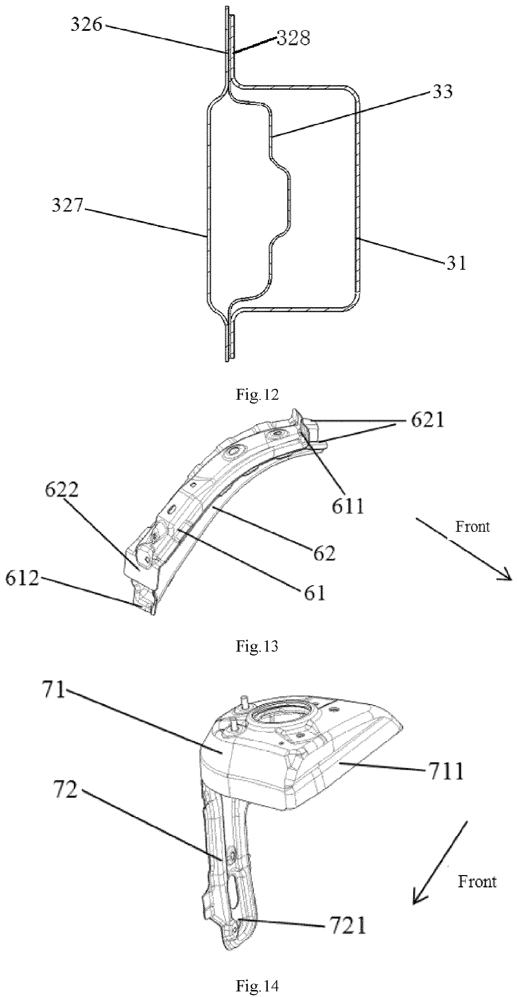

As shown in FIG. 1 and FIG. 14, the second wheel bumper reinforcement member assembly 7 may be disposed between the cabin side member assembly 3 and the cabin upper side member assembly 2, so that the cabin side member assembly 3, the cabin upper side member assembly 2, and the second wheel bumper reinforcement member assembly 7 form a three-rung ladder-type frame structure (structurally analogous to the Chinese character " 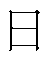 "). The second wheel bumper reinforcement member assembly 7 may disperse and transmit impact energy from the cabin upper side member assembly 2 to the cabin side member assembly 3, thereby reducing the transmission of impact energy into the cab.

Specifically, as shown in FIG. 14, the second wheel bumper reinforcement member assembly 7 includes a wheel bumper housing 71 and a wheel bumper housing reinforcement beam 72. The wheel bumper housing 71 is mounted on the wheel bumper housing reinforcement beam 72. An end portion of the wheel bumper housing 71 forms a wheel bumper housing lap joint surface 711. A wheel bumper housing reinforcement beam lap joint surface 721 is formed at a lower end of the wheel bumper housing reinforcement beam 72. The second wheel bumper reinforcement member assembly 7 is connected to the first cabin upper side member middle section inner plate lap joint surface 241 of the cabin upper side member assembly 2 by the wheel bumper housing lap joint surface 711. The second wheel bumper reinforcement member assembly 7 is oppositely connected to the cabin side member outer plate flanged edge 326 and the cabin side member outer plate lateral edge 327 of the cabin side member assembly 3 by the wheel bumper housing reinforcement beam lap joint surface 721.

As shown in FIG. 1 and FIG. 13, the first wheel bumper reinforcement member assembly 6 may be further provided between the cabin side member assembly 3 and the cabin upper side member assembly 2 to enable the cabin side member assembly 3, the cabin upper side member assembly 2, and the first wheel bumper reinforcement member assembly 6 to form a three-rung ladder-type frame structure (structurally analogous to the Chinese character " 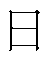 "). The first wheel bumper reinforcement member assembly 6 may disperse and transmit impact energy from the cabin upper side member assembly 2 to the cabin side member assembly 3, thereby reducing the transmission of impact energy into the cab.

Specifically, as shown in FIG. 13, the first wheel bumper reinforcement member assembly 6 includes a wheel bumper reinforcement member upper plate 61 and a wheel bumper reinforcement member lower plate 62. The wheel bumper reinforcement member upper plate 61 and the wheel bumper reinforcement member lower plate 62 form a "π"-shaped structure (structurally analogous to the Chinese character " 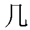 "). The wheel bumper reinforcement member upper plate 61 and the wheel bumper reinforcement member lower plate 62 are oppositely lap-jointed to form the box-shaped structure with the rectangular cross-section. The wheel bumper reinforcement member upper plate 61 includes a first wheel bumper reinforcement member upper plate lap joint surface 611 and a second wheel bumper reinforcement member upper plate lap joint surface 612. The first wheel bumper reinforcement member upper plate lap joint surface 611 and the second wheel bumper reinforcement member upper plate lap joint surface 612 are respectively a left end and a right end of the wheel bumper reinforcement member upper plate 61. The wheel bumper reinforcement member lower plate 62 includes a first wheel bumper reinforcement member lower plate lap joint surface 621 and a second wheel bumper reinforcement member lower plate lap joint surface 622. The first wheel bumper reinforcement member lower plate lap joint surface 621 and the second wheel bumper reinforcement member lower plate lap joint surface 622 are respectively a left end and a right end of the wheel bumper reinforcement member lower plate 62. The first wheel bumper reinforcement member assembly 6 is oppositely connected to the cabin side member outer plate flanged edge 326 and the cabin side member outer plate lateral edge 327 of the cabin side member assembly 3 by the first wheel bumper reinforcement member upper plate lap joint surface 611 and the first wheel bumper reinforcement member lower plate lap joint surface 621. The first wheel bumper reinforcement member assembly 6 is oppositely connected to the first cabin upper side member middle section inner plate lap joint surface 241 and the second cabin upper side member middle section inner plate lap joint surface 242 of the cabin upper side member assembly 2 by the second wheel bumper reinforcement member upper plate lap joint surface 612 and the second wheel bumper reinforcement member lower plate lap joint surface 622.

Optionally, the first wheel bumper reinforcement member assembly 6 and the second wheel bumper reinforcement member assembly 7 may be further disposed between the cabin side member assembly 3 and the cabin upper side member assembly 2, to enable the cabin side member assembly 3, the cabin upper side member assembly 2, the first wheel bumper reinforcement member assembly 6, and the second wheel bumper reinforcement member assembly 7 to form a four-rung ladder-type frame structure (structurally analogous to the Chinese character " 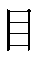 "). The first wheel bumper reinforcement member assembly 6 and the second wheel bumper reinforcement member assembly 7 may disperse and transmit impact energy from the cabin upper side member assembly 2 to the cabin side member assembly 3, thereby reducing the transmission of impact energy into the cab.

As shown in FIG. 1, the force-bearing assembly further includes a cabin side member rear section assembly 5, and the cabin side member rear section assembly 5 is mounted on a rear end of the cabin side member assembly 3.

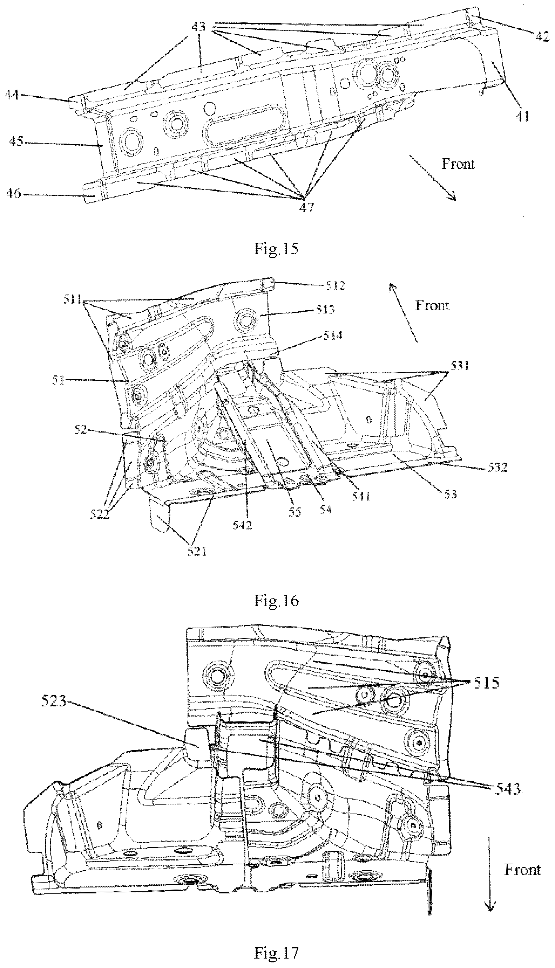

Specifically, as shown in FIG. 16 and FIG. 17, the cabin side member rear section assembly 5 includes a side member A-pillar connection member 51, a side member rear section outer liner plate 52, a side member rear section inner liner plate 53, a side member rear section 54, and a side member rear section inner support plate 55, the side member rear section outer liner plate 52 and the side member rear section inner liner plate 53 are respectively provided on two sides of the side member rear section inner support plate 55, the side member rear section 54 is housed within the side member rear section inner support plate 55, and the side member A-pillar connection member 51 is mounted on top of the side member rear section outer liner plate 52.

As seen from top to bottom, the side member A-pillar connection member 51, the side member rear section outer liner plate 52, the side member rear section 54, and the side member rear section inner liner plate 53 of the cabin side member rear section assembly 5 form an up arrow shape (structurally analogous to the Chinese character " 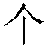 ") in terms of structural shape, or has a claw shape with three toes. When a collision occurs, three force transmission paths are formed, making it convenient to disperse and transmit impact energy.

The side member A-pillar connection member 51 includes a first side member A-pillar connection member lap joint surface 511, a second side member A-pillar connection member lap joint surface 512, a third side member A-pillar connection member lap joint surface 513, a fourth side member A-pillar connection member lap joint surface 514, and a fifth side member A-pillar connection member lap joint surface 515. The first side member A-pillar connection member lap joint surface 511, the second side member A-pillar connection member lap joint surface 512, the third side member A-pillar connection member lap joint surface 513, and the fourth side member A-pillar connection member lap joint surface 514 are located on a front side surface of the side member A-pillar connection member 51. The fifth side member A-pillar connection member lap joint surface 515 is located on a rear side surface of the side member A-pillar connection member 51. The side member rear section outer liner plate 52 includes a first side member rear section outer liner plate lap joint surface 521, a second the side member rear section outer liner plate lap joint surface 522, and a third the side member rear section outer liner plate lap joint surface 523. The first side member rear section outer liner plate lap joint surface 521 and the second the side member rear section outer liner plate lap joint surface 522 are located on a front side surface of the side member rear section outer liner plate 52. The third the side member rear section outer liner plate lap joint surface 523 is located on a rear side surface of the side member rear section outer liner plate 52. The side member rear section inner liner plate 53 includes a first side member rear section inner liner plate lap joint surface 531 and a second the side member rear section inner liner plate lap joint surface 532. The first side member rear section inner liner plate lap joint surface 531 and the second the side member rear section inner liner plate lap joint surface 532 are located on a front side surface of the side member rear section inner liner plate 53. The side member rear section 54 includes a first side member rear section lap joint surface 541, a second side member rear section lap joint surface 542, and a third side member rear section lap joint surface 543. The first side member rear section lap joint surface 541 and the second side member rear section lap joint surface 542 are located on a front side surface of the side member rear section 54. The third side member rear section lap joint surface 543 are located on a rear side surface of the side member rear section 54. The cabin side member rear section assembly 5 is connected to the floor panel, the sill beam, and the like at the lower portion of the body-in-white by the first side member A-pillar connection member lap joint surface 511, the first side member rear section outer liner plate lap joint surface 521, the second the side member rear section outer liner plate lap joint surface 522, the first side member rear section inner liner plate lap joint surface 531, the second the side member rear section inner liner plate lap joint surface 532, the first side member rear section lap joint surface 541, and the second side member rear section lap joint surface 542 to form a closed cavity. The cabin side member rear section assembly 5 is oppositely connected to the first cabin side member inner plate lap joint surface 314, the second cabin side member outer plate lap joint surface 324, and the third cabin side member outer plate lap joint surface 325 of the cabin side member assembly 3 by the second side member A-pillar connection member lap joint surface 512, the third side member A-pillar connection member lap joint surface 513, the fourth side member A-pillar connection member lap joint surface 514, the fifth side member A-pillar connection member lap joint surface 515, the third the side member rear section outer liner plate lap joint surface 523, and the third side member rear section lap joint surface 543.

In a specific embodiment, the force-bearing assembly further includes a reinforcement cross beam assembly 4. Two ends of the reinforcement cross beam assembly 4 are respectively connected to one cabin side member rear section assembly 5, to enable the impact cross beam assembly 8, the cabin side member assemblies 3, the cabin side member rear section assemblies 5, and the reinforcement cross beam assembly 4 to be interconnected to form a closed frame structure. A main body cross-section of the reinforcement cross beam assembly 4 exhibits a "π" shape (structurally analogous to the Chinese character " 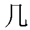 "), and includes a first reinforcement cross beam assembly lap joint surface 41, a second reinforcement cross beam assembly lap joint surface 42, a third reinforcement cross beam assembly lap joint surface 43, a fourth reinforcement cross beam assembly lap joint surface 44, a fifth reinforcement cross beam assembly lap joint surface 45, a sixth reinforcement cross beam assembly lap joint surface 46, and a seventh reinforcement cross beam assembly lap joint surface 47. The first reinforcement cross beam assembly lap joint surface 41 and the second reinforcement cross beam assembly lap joint surface 42 are located at a left end of the reinforcement cross beam assembly 4. The fourth reinforcement cross beam assembly lap joint surface 44, the fifth reinforcement cross beam assembly lap joint surface 45, and the sixth reinforcement cross beam assembly lap joint surface 46 are located at a right end of the reinforcement cross beam assembly 4. The third reinforcement cross beam assembly lap joint surface 43 is located at an upper end of the reinforcement cross beam assembly 4. The seventh reinforcement cross beam assembly lap joint surface 47 is located at a lower end of the reinforcement cross beam assembly 4. The cabin side member rear section assembly 5 on the left side is oppositely connected to the first reinforcement cross beam assembly lap joint surface 41 and the second reinforcement cross beam assembly lap joint surface 42 of the reinforcement cross beam assembly 4 by the second side member A-pillar connection member lap joint surface 512, the third side member A-pillar connection member lap joint surface 513, and the fourth side member A-pillar connection member lap joint surface 514. The cabin side member rear section assembly 5 on the right side is oppositely connected to the fourth reinforcement cross beam assembly lap joint surface 44, the fifth reinforcement cross beam assembly lap joint surface 45, and the sixth reinforcement cross beam assembly lap joint surface 46 of the reinforcement cross beam assembly 4 by the second side member A-pillar connection member lap joint surface 512, the third side member A-pillar connection member lap joint surface 513, and the fourth side member A-pillar connection member lap joint surface 514. The reinforcement cross beam assembly 4 is connected to a lower portion of the body-in-white at a rear portion by the third reinforcement cross beam assembly lap joint surface 43 and the seventh reinforcement cross beam assembly lap joint surface 47.

To facilitate a better understanding of the technical concept of the present application, the following description incorporates relatively comprehensive technical features.

As shown in FIG. 1 to FIG. 17, a preferred embodiment of the present application provides a front-end frame structure, including an impact cross beam assembly 8 and two force-bearing assemblies. The two force-bearing assemblies are symmetrically arranged. Energy absorption box assemblies 81 are respectively connected to two ends of the impact cross beam assembly 8. Each of the energy absorption box assemblies 81 is connected to a corresponding force-bearing assembly. The force-bearing assembly includes a cabin side member sealing plate assembly 1, a cabin side member assembly 3, a cabin upper side member assembly 2, a reinforcement cross beam assembly 4, a cabin side member rear section assembly 5, a first wheel bumper reinforcement member assembly 6, and a second wheel bumper reinforcement member assembly 7. The cabin side member sealing plate assembly 1 further includes a side member front-end sealing plate 11, a side member front-end upper plate 12, a side member front-end lower plate 13, a force transmission member 14, a side member sealing plate support plate 15, and a side member sealing plate reinforcement member 16. The side member front-end lower plate 13 is mounted on a rear end surface of the side member front-end sealing plate 11. A plurality of groove ribs 131 are provided on the side member front-end lower plate 13. The force transmission member 14 may be a circular tube. The force transmission member 14 is mounted on the groove ribs 131. The side member sealing plate support plate 15 is generally a triangular frame structure. One end of the side member sealing plate support plate 15 is connected to the side member front-end lower plate 13, and a protrusion is provided at the end to form a passage channel to allow the force transmission member 14 to pass through. A weld access hole 152 is opened in the passage channel. The force transmission member 14 and the side member sealing plate support plate 15 are fixed through the weld access hole 152 in a welding manner. The side member front-end upper plate 12 is located above the side member front-end lower plate 13, and the side member front-end upper plate 12 is separately connected to the side member front-end lower plate 13, the side member sealing plate support plate 15 and the cabin side member assembly 3. The side member sealing plate reinforcement member 16 is located below the side member front-end lower plate 13, and the side member sealing plate reinforcement member 16 is separately connected to the side member front-end lower plate 13, the side member sealing plate support plate 15 and the cabin side member assembly 3. A lateral edge of the side member sealing plate support plate 15 tilts outward from one end close to the side member front-end lower plate 13 to the other end far away from the side member front-end lower plate 13. A second side member front-end upper plate lap joint surface 122 of the side member front-end upper plate 12, a sixth side member sealing plate support plate lap joint surface 158 and a fourth side member sealing plate support plate lap joint surface 156 of the side member sealing plate support plate 15, a second side member sealing plate reinforcement member lap joint surface 162 of the side member sealing plate reinforcement member 16, and a portion of the side member front-end sealing plate 11 form a closed frame. The cabin side member sealing plate assembly 1 is generally a wedge structure tilting rearward. A front end of the cabin side member assembly 3 is separately connected to the side member front-end sealing plate 11, the side member front-end upper plate 12, the side member sealing plate support plate 15, and the side member sealing plate reinforcement member 16. In addition, the cabin side member assembly 3 includes a cabin side member inner plate 31 and a cabin side member outer plate 32. The cabin side member inner plate 31 and the cabin side member outer plate 32 are oppositely lap-joined to each other to form a box-shaped structure with a rectangular cross-section. A cabin side member inner plate through hole 313 is provided on a lateral edge of the cabin side member inner plate 31. A cabin side member outer plate through hole 322 is provided in a cabin side member outer plate lateral edge 327 of the cabin side member outer plate 32. The force transmission member 14 passes through the cabin side member outer plate through hole 322 of the cabin side member outer plate 32, and is connected to the cabin side member inner plate through hole 313 of the cabin side member inner plate 31. An end portion of the force transmission member 14 may be generally connected to the cabin side member inner plate through hole 313 of the cabin side member inner plate 31 through welding. A first collapsible guide rib 311 and a second collapsible guide rib 312 are provided on the cabin side member inner plate 31 of the cabin side member assembly 3. Both the first collapsible guide rib 311 and the second collapsible guide rib 312 extend along an up-down direction. A third collapsible guide rib 321 is further provided on the cabin side member outer plate 32. A front end of the cabin upper side member assembly 2 is connected to the cabin side member sealing plate assembly 1. A rear end of the cabin upper side member assembly 2 is connected to the body-in-white at a rear portion, and is generally connected to the passenger compartment of the vehicle. The cabin upper side member assembly 2 is substantially arc-shaped, and a cross-sectional area of the cabin upper side member assembly 2 gradually increases from front to back. A collapsible rib 261 is provided on a cabin upper side member rear section lower plate 26 of the cabin upper side member assembly 2. A first weakened hole 221 and a second weakened hole 222 are provided in a rear-end area of the cabin upper side member rear section outer plate 22. The first wheel bumper reinforcement member assembly 6 and the second wheel bumper reinforcement member assembly 7 are disposed between the cabin side member assembly 3 and the cabin upper side member assembly 2, so that the cabin side member assembly 3, the cabin upper side member assembly 2, the first wheel bumper reinforcement member assembly 6, and the second wheel bumper reinforcement member assembly 7 form a four-rung ladder-type frame structure (structurally analogous to the Chinese character " 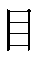 "). A rear end of the cabin side member assembly 3 is connected to the cabin side member rear section assembly 5. The cabin side member rear section assembly 5 includes a side member A-pillar connection member 51, a side member rear section outer liner plate 52, a side member rear section inner liner plate 53, a side member rear section 54, and a side member rear section inner support plate 55. The side member rear section outer liner plate 52 and the side member rear section inner liner plate 53 are respectively provided on two sides of the side member rear section inner support plate 55. The side member rear section 54 is housed within the side member rear section inner support plate 55. The side member A-pillar connection member 51 is mounted on top of the side member rear section outer liner plate 52. As seen from top to bottom, the side member A-pillar connection member 51, the side member rear section outer liner plate 52, the side member rear section 54, and the side member rear section inner liner plate 53 of the cabin side member rear section assembly 5 form an up arrow shape (structurally analogous to the Chinese character " 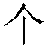 ") in terms of structural shape, to form a force dispersion and transmission structure. Two ends of the reinforcement cross beam assembly 4 are respectively connected to one cabin side member rear section assembly 5, to enable the impact cross beam assembly 8, the cabin side member assemblies 3, the cabin side member rear section assemblies 5, and the reinforcement cross beam assembly 4 to be interconnected to form a closed frame structure.

When the vehicle encounters the 25% overlap frontal crash, as shown in FIG. 1, an end portion of the impact cross beam assembly 8 collides with the barrier. Because the cabin side member sealing plate assembly 1 is generally a wedge structure that tilts rearward, and because the force transmission member 14 is disposed, part of impact force borne by the cabin upper side member assembly 2 may be dispersed and transmitted to the cabin side member assembly 3. In addition, the first wheel bumper reinforcement member assembly 6 and the second wheel bumper reinforcement member assembly 7 are disposed between the cabin side member assembly 3 and the cabin upper side member assembly 2, so that the cabin side member assembly 3, the cabin upper side member assembly 2, the first wheel bumper reinforcement member assembly 6, and the second wheel bumper reinforcement member assembly 7 form a four-rung ladder-type frame structure (structurally analogous to the Chinese character " 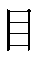 "). During the front 25% overlap impact process, the four-rung ladder-type frame structure primarily absorbs and transmits impact energy. The first wheel bumper reinforcement member assembly 6 and the second wheel bumper reinforcement member assembly 7 can also disperse and transmit part of impact force borne by the cabin upper side member assembly 2 to the cabin side member assembly 3, so that the cabin side member assembly can continuously disperse and absorb impact energy, thereby reducing impact energy borne by the cabin upper side member assembly. In addition, the collapsible guide ribs are disposed at a middle section of the cabin side member assembly 3 to enable the cabin side member assembly 3 to fully deform to absorb energy. A force transmission dispersion structure is disposed in the cabin side member rear section assembly 5, so that energy can be dispersed and transmitted to the reinforcement cross beam assembly 4 and the floor panel and the sill beam at the lower portion of the body-in-white. The vertical weakened holes and collapsible guide ribs are disposed at the rear end of the cabin upper side member assembly 2 to enable the cabin upper side member assembly 2 to collapse and absorb energy to reduce the transmission of impact energy to an upper portion of a cab, thereby reducing the intrusion into the cab, and achieving the objective of improving the 25% overlap frontal crash performance. Through the structural improvement, the front-end frame structure can deform to absorb energy to effectively transmit impact energy to the floor panel and the sill at the lower portion of the cab, reduce the amount of intrusion into the upper portion of the cab, and protect occupants, thereby improving the 25% overlap frontal crash performance.

Embodiments of the present application further provide a vehicle, provided with the foregoing front-end frame structure.

The above embodiments are merely preferred embodiments provided to fully illustrate the present application, and the scope of protection of the present application is not limited thereto. Any equivalent substitution or modification made by those skilled in the art based on the present application shall fall within the scope of protection of the present application.

## Claims

1. A front-end frame structure, comprising an impact cross beam assembly (8), and two force-bearing assemblies which are symmetrically arranged, wherein energy absorption box assemblies (81) each connected to a corresponding force-bearing assembly are respectively provided at two ends of the impact cross beam assembly (8), each of the force-bearing assemblies comprises a cabin side member sealing plate assembly (1) connected to one of the energy absorption box assemblies (81), a cabin side member assembly (3), and a cabin upper side member assembly (2), one end of the cabin side member sealing plate assembly (1) is connected to the cabin side member assembly (3), the other end of the cabin side member sealing plate assembly (1) is connected to the cabin upper side member assembly (2), and the cabin side member sealing plate assembly (1) comprises a force transmission member (14) used for dispersing and transmitting impact energy borne by the cabin upper side member assembly (2) to the cabin side member assembly (3).

2. The front-end frame structure according to claim 1, wherein the cabin side member sealing plate assembly (1) further comprises a side member front-end sealing plate (11), a side member front-end lower plate (13), and a side member sealing plate support plate (15), the side member front-end lower plate (13) is mounted on a surface on one side of the side member front-end sealing plate (11), the force transmission member (14) is mounted on the side member front-end lower plate (13), one end of the side member sealing plate support plate (15) is connected to the side member front-end lower plate (13) and is provided with a passage channel for allowing the force transmission member (14) to pass through, the side member front-end lower plate (13) is connected to the corresponding cabin upper side member assembly (2), both the side member sealing plate support plate (15) and the force transmission member (14) are connected to the corresponding cabin side member assembly (3), and a surface on the other side of the side member front-end sealing plate (11) is connected to the corresponding energy absorption box assembly (81).

3. The front-end frame structure according to claim 2, wherein the cabin side member sealing plate assembly (1) further comprises a side member front-end upper plate (12) and a side member sealing plate reinforcement member (16), the side member front-end upper plate (12) is located above the side member front-end lower plate (13), the side member front-end upper plate (12) is connected to the side member front-end lower plate (13), the side member sealing plate support plate (15) and the cabin side member assembly (3), the side member sealing plate reinforcement member (16) is located below the side member front-end lower plate (13), and the side member sealing plate reinforcement member (16) is connected to the side member front-end lower plate (13), the side member sealing plate support plate (15) and the cabin side member assembly (3).

4. The front-end frame structure according to claim 2, wherein the force transmission member (14) is a circular tube, and the side member front-end lower plate (13) is provided with a groove rib (131) used for mounting the force transmission member (14).

5. The front-end frame structure according to claim 2, wherein the cabin side member assembly (3) comprises a cabin side member inner plate (31) and a cabin side member outer plate (32), the cabin side member inner plate (31) and the cabin side member outer plate (32) are joined to each other to form a box-shaped structure with a rectangular cross-section, and the force transmission member (14) passes through the cabin side member outer plate (32) to be connected to the cabin side member inner plate (31).

6. The front-end frame structure according to claim 5, wherein a cabin side member internal reinforcement plate (33) located inside the box-shaped structure is mounted on the cabin side member inner plate (31).

7. The front-end frame structure according to claim 6, wherein a plurality of cabin side member collapsible limiter plates are provided on the cabin side member internal reinforcement plate (33).

8. The front-end frame structure according to claim 7, wherein the cabin side member inner plate (31) is provided with a first collapsible guide rib (311) and a second collapsible guide rib (312) both extending along an up-down direction, and in a front-back direction, the first collapsible guide rib (311) is located between neighboring cabin side member collapsible limiter plates, and the second collapsible guide rib (312) is located in front of the first collapsible guide rib (311), the first collapsible guide rib (311) is a collapsible guide concave rib, and the second collapsible guide rib (312) is a collapsible guide convex rib.

9. The front-end frame structure according to claim 8, wherein the cabin side member outer plate (32) is provided with a third collapsible guide rib (321) extending along the up-down direction, and the third collapsible guide rib (321) is a collapsible guide concave rib.

10. The front-end frame structure according to claim 1, wherein the cabin upper side member assembly (2) comprises a cabin upper side member outer plate and a cabin upper side member inner plate, and the cabin upper side member outer plate and the cabin upper side member inner plate are joined to each other to form a box-shaped structure with a rectangular cross-section.

11. The front-end frame structure according to claim 10, wherein the cabin upper side member assembly (2) is provided with a collapsible rib (261).

12. The front-end frame structure according to claim 10, wherein the cabin upper side member assembly (2) is provided with a weakened hole.

13. The front-end frame structure according to claim 10, wherein the cabin upper side member assembly (2) is arc-shaped, and a cross-sectional area of the cabin upper side member assembly (2) gradually increases from front to back.

14. The front-end frame structure according to any one of claims 1 to 13, wherein the cabin side member sealing plate assembly (1) is an inclined wedge structure.

15. The front-end frame structure according to any one of claims 1 to 13, wherein a first wheel bumper reinforcement member assembly (6) is provided between the cabin side member assembly (3) and the cabin upper side member assembly (2).

16. The front-end frame structure according to claim 15, wherein the first wheel bumper reinforcement member assembly (6) comprises a wheel bumper reinforcement member upper plate (61) and a wheel bumper reinforcement member lower plate (62), and the wheel bumper reinforcement member upper plate (61) and the wheel bumper reinforcement member lower plate (62) are joined to each other to form a box-shaped structure with a rectangular cross-section.

17. The front-end frame structure according to claim 15, wherein a second wheel bumper reinforcement member assembly (7) is further provided between the cabin side member assembly (3) and the cabin upper side member assembly (2), and the first wheel bumper reinforcement member assembly (6) and the second wheel bumper reinforcement member assembly (7) are arranged in parallel.

18. The front-end frame structure according to claim 17, wherein the second wheel bumper reinforcement member assembly (7) comprises a wheel bumper housing (71) and a wheel bumper housing reinforcement beam (72), and the wheel bumper housing (71) is mounted on the wheel bumper housing reinforcement beam (72).

19. The front-end frame structure according to any one of claims 1 to 13, wherein the force-bearing assembly further comprises a cabin side member rear section assembly (5), and the cabin side member rear section assembly (5) is mounted on a rear end of the cabin side member assembly (3).

20. The front-end frame structure according to claim 19, wherein the cabin side member rear section assembly (5) comprises a side member A-pillar connection member (51), a side member rear section outer liner plate (52), a side member rear section inner liner plate (53), a side member rear section (54), and a side member rear section inner support plate (55), the side member rear section outer liner plate (52) and the side member rear section inner liner plate (53) are respectively provided on two sides of the side member rear section inner support plate (55), the side member rear section (54) is housed within the side member rear section inner support plate (55), and the side member A-pillar connection member (51) is mounted on top of the side member rear section outer liner plate (52).

21. The front-end frame structure according to claim 19, wherein the force-bearing assembly further comprises a reinforcement cross beam assembly (4), and two ends of the reinforcement cross beam assembly (4) are respectively connected to one cabin side member rear section assembly (5), to enable the impact cross beam assembly (8), the cabin side member assemblies (3), the cabin side member rear section assemblies (5), and the reinforcement cross beam assembly (4) to be interconnected to form a closed frame structure.

22. A vehicle, provided with the front-end frame structure of any one of claims 1 to 21.
